# EUROPÄISCHE PATENTSCHRIFT

(11) **EP 0 343 334 B1**
(45) Veröffentlichungstag und Bekanntmachung des Hinweises auf die Patenterteilung: **13.01.1993**
(21) Anmeldenummer: 89104836.5
(22) Anmeldetag: 17.03.1989
(51) Int. Cl.: B23B 29/32, B23Q 16/10

(54) **Werkzeugrevolver**
Revolving tool holding torret
Porte outil révolver

(30) Priorität: 26.05.1988 DE 3817937
(43) Veröffentlichungstag der Anmeldung: 29.11.1989
(73) Patentinhaber: Sauter Feinmechanik GmbH, D-72545 Metzingen (DE)
(72) Erfinder: Sauter, Willy, D-7410 Reutlingen (DE); Obmann, Erhard, D-7410 Reutlingen (DE); Thumm, Helmut, Dipl.-Ing. (FH), D-7430 Metzingen (DE)
(74) Vertreter: Patentanwälte Bartels und Partner

(56) Entgegenhaltungen:
- EP-A- 0 159 447
- DE-A- 2 901 789
- DE-A- 3 702 418
- FR-A- 2 364 092
- GB-A- 2 169 528
- US-A- 4 007 521

## Beschreibung

Die Erfindung bezieht sich auf einen Werkzeugrevolver, der die Merkmale des Oberbegriffs des Anspruches 1 aufweist.

Bei einem bekannten Werkzeugrevolver dieser Art (DE-C-3134969) ist für die Steuerung der Axialbewegung des Verriegelungsteils ein Kurventrieb vorgesehen, dessen getriebener Teil ein Kurvenfenster hat, das in Umfangsrichtung verlaufende Mittelabschnitte und schräg zu diesem verlaufende Endabschnitte aufweist und dessen treibender Teil als in das Kurvenfenster eingreifendes Steuer- und Antriebsglied, beispielsweise als Rolle, ausgebildet ist. Wenn der Revolverkopf in eine andere Drehstellung gebracht werden soll, muß zunächst das Steuerungs- und Antriebsglied so weit relativ zum Revolverkopf und dem Verriegelungsteil gedreht werden, bis letzterer seine Entriegelungsstellung erreicht hat. Erst dann wird bei der weiteren Drehbewegung des Steuerungs- und Antriebsgliedes der Revolverkopf mitgenommen. Ist die neue Schwenkstellung erreicht, dann erfolgt die Indexierung des Revolverkopfes mittels eines Bolzens. Anschließend muß das Steuerungs- und Antriebsglied in der entgegengesetzten Richtung gedreht werden, um das Verriegelungsteil in die Verriegelungsstellung zu bringen.

Bei einem anderen bekannten Werkzeugrevolver (GB-A-2169528) wird der Revolverkopf bei einer Schwenkbewegung unmittelbar über die zentrale Antriebswelle angetrieben. Da auch bei diesem Werkzeugrevolver zuvor das Verriegelungsteil in die Entriegelungsstellung gebracht werden muß, ehe der Revolverkopf gedreht werden kann, müssen die Antriebswelle über ein diskontinuierlich arbeitendes Getriebe und der treibende Teil des Kurventriebes für die Axialbewegung des Verriegelungsteils über ein kontinuierlich arbeitendes Getriebe angetrieben werden.

Der Erfindung liegt die Aufgabe zugrunde, einen Revolverkopf der eingangs genannten Art zu schaffen, mit dem sich rascher als bei den bekannten Werkzeugrevolvern der Revolverkopf von einer Winkelstellung in eine andere bringen läßt. Diese Aufgabe wird durch die Merkmale des Anspruches 1 gelöst.

Bei einem derartigen Werkzeugrevolver muß der Antrieb nach dem Indexieren nicht zurückgedreht werden, um die Verzahnung des Verriegelungsteils in Eingriff mit der Verzahnung des Revolverkopfers zu bringen, wodurch die für das Reversieren erforderliche Zeit eingespart wird.

Die Kurvenbahn ist vorzugsweise gemäß den Ansprüchen 2 und 3 ausgebildet und angeordnet.

Vor allem dann, wenn auf der Kurvenbahn nicht Ringrollen laufen, die auf radial angeordneten Wellen drehbar gelagert sind, sondern die Kurvenbahn als Lauffläche für Wälzkörper dient, bei denen es sich um Kugeln oder Rollen handeln kann, ist eine zweite Kurvenbahn gemäß Anspruch 4 vorteilhaft. Die Anzahl der Wälzkörper bestimmt hierbei den vom Revolverkopf zurückzulegenden Schwenkweg von einer festen Winkelstellung in eine andere feste Winkelstellung. Grundsätzlich könnte aber auch die Kurvenbahn die eine Lagerfläche eines Gleitlagers bilden.

Sofern erforderlich, kann für den axial verschiebbaren Teil, bei dem es sich in der Regel um den Verriegelungsteil handeln wird, eine Arretierungsvorrichtung gemäß Anspruch 5 vorgesehen sein, die vorzugsweise gemäß Anspruch 6 ausgebildet ist.

Anstelle einer in Drehrichtung starren Getriebeverbindung zwischen dem Steuerkörper und dem Antriebsmotor kann man auch eine elastisch nachgiebige Drehverbindung mit Hilfe einer elastischen Kupplungseinrichtung vorsehen. Eine derartige elastische Kupplungseinrichtung hat den Vorteil, daß sie stoßartige Drehmomente, wie sie sowohl von der Antriebsseite als auch vom Revolverkopf her in die Getriebeverbindung gelangen können, dämpfend auffängt. Eine vorteilhafte Ausgestaltung einer solchen elastischen Kupplungseinrichtung ist Gegenstand des Anspruches 8.

Den Außenring der elastischen Kupplungseinrichtung kann man mit dem Steuerkörper gemäß Anspruch 9 über eine formschlüssige Mitnahmevorrichtung kuppeln.

Im folgenden ist die Erfindung anhand von zwei in der Zeichnung dargestellten Ausführungsbeispielen im einzelnen erläutert.
Es zeigen
- Fig. 1: einen Längsschnitt des ersten Ausführungsbeispiels,
- Fig. 2: eine unvollständig und teilweise im Schnitt dargestellte Ansicht des Verriegelungsteils und der sich an dieses anschließenden Komponenten in der Verriegelungsstellung des Verriegelungsteils,
- Fig. 3: eine Ansicht entsprechend Fig. 2 mit dem Verriegelungsteil in der Freigabestellung,
- Fig. 4: einen Längsschnitt eines zweiten Ausführungsbeispiels.

Der Werkzeugrevolver hat ein an einer nicht dargestellten Werkzeugmaschine anbringbares Gehäuse 1, das auf seiner in der Zeichnung rechten Seite mittels eines nur teilweise dargestellten topfförmigen Gehäusedeckels 2 abgeschlossen ist. An dem Gehäusedeckel 2 ist ein Antriebsmotor 3 befestigt, der in eine ihn teilweise umgebende Haube 2a hineinragt. Ein auf der Antriebswelle des Antriebsmotors 3 angebrachtes Antriebsritzel 4 ragt in eine Ausnehmung im Gehäusedeckel 2 hinein und dient zum Antrieb eines Zahnrades 5, das auf einem Vorsprung des Gehäusedeckels mittels eines Wälzlagers drehbar gelagert ist. Das Zahnrad 5 ist einstückig mit einem Ritzel ausgebildet, das mit einem Umlaufrad 7 eines Planetengetriebes kämmt. Die Zähne des Umlaufrades 7 greifen in die Innenverzahnung eines ortsfesten Hohlrades 8 ein, das drehfest mit dem Gehäuse 1 verbunden ist. Das Umlaufrad 7 ist auf einem Lagerzapfen 9 drehbar gelagert, der exzentrisch in einem Antriebsrad 10 sitzt.

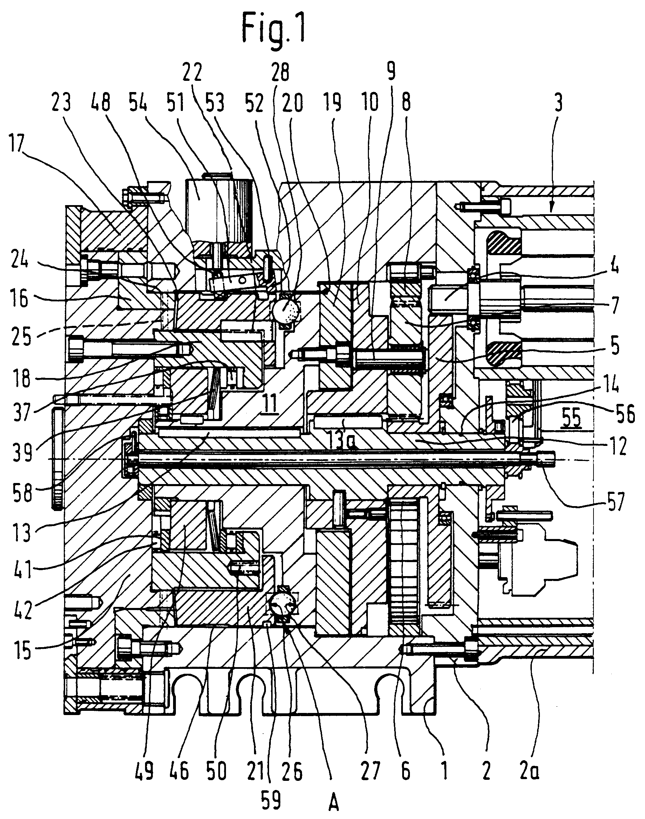

Koaxial zum Antriebsrad 10 ist ein Steuerkörper 11 angeordnet. Das Antriebsrad 10 und der Steuerkörper 11 sind von einer Hohlwelle 12 durchsetzt und mit dieser mittels eines Einlegekörpers 13 bzw. 13a drehfest verbunden. Die Welle 12 durchsetzt mit einem abgesetzten Teil das Ritzel 6 mit Lagerspiel und ist im Gehäusedeckel 2 drehbar gelagert. Der Spalt zwischen dem Gehäusedeckel 2 und der Welle 12 ist mittels eines Dichtringes 14 abgedichtet. Auf der in Fig. 1 linken Seite ragt die Welle 12 in einen Revolverkopf 15 hinein, der in einem Zahnring 16 radial und axial gelagert und von einem Gehäusering 17 umgeben ist. Die beiden Ringe 16 und 17 sind jeweils mittels Schrauben am Gehäuse 1 befestigt. Die Welle 12 und der Revolverkopf 15 sind gegenseitig drehbar.

Der Steuerkörper 11 ist von einem hohlzylinderartigen Verbindungskörper 18 mit Abstand umgeben, der mittels Schrauben mit dem Revolverkopf 15 verbunden ist. Ein mit dem Steuerkörper 11 durch Schrauben verbundener Lagerring 19 steht an einer Schulter 20 des Gehäuses 1 an. Die axiale Lagerung des Revolverkopfes 15 an dem Zahnring 16 und die axiale Abstützung des mit dem Steuerkörper 11 verbundenen Lagerringes 19 am Gehäuse 1 verhindert eine axiale Bewegung des Revolverkopfes 15 gegenüber dem Gehäuse 1.

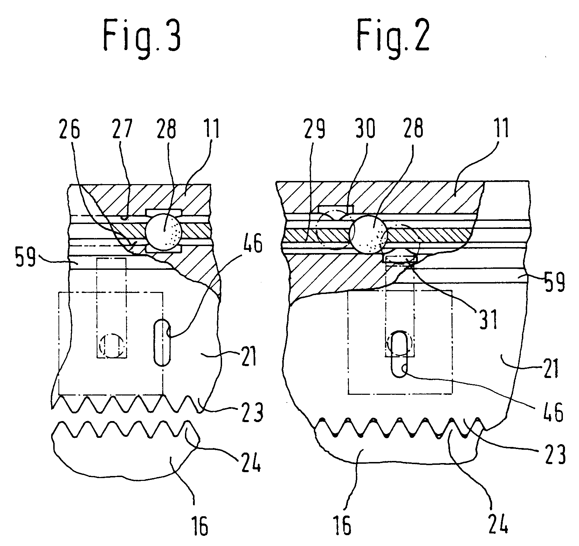

Der Verbindungskörper 18 ist von einem hohlzylinderartigen Verriegelungsteil 21 ebenfalls mit Abstand umgeben, der in Achsrichtung bewegbar ist. Der Verriegelungsteil 21 ist mittels eines mit axialem Spiel darin eingreifenden und parallel zur Achse der Welle 12 angeordneten Stiftes 22 mit dem Verbindungskörper 18 drehfest verbunden. Der Verriegelungsteil 21 weist auf seiner dem Revolverkopf 15 zugewandten Seite Axialzähne 23 auf. Mit diesen Axialzähnen zusammenwirkende Axialzähne 24 und 25 sind am Zahnring 16 und am Revolverkopf 15 angeordnet. Die Axialzähne 24 und 25 sind auf gleicher Höhe und in Umfangsrichtung gegenseitig ausgerichtet. Die Axialzähne 23 greifen in der in den Fig. 1 und 2 dargestellten Lage des Verriegelungsteiles 21 in die Axialzähne 24 und 25 am Zahnring 16 bzw. am Revolverkopf 15 ein und verhindern ein Drehen des Revolverkopfes 15 um seine Achse gegenüber dem Zahnring 16.

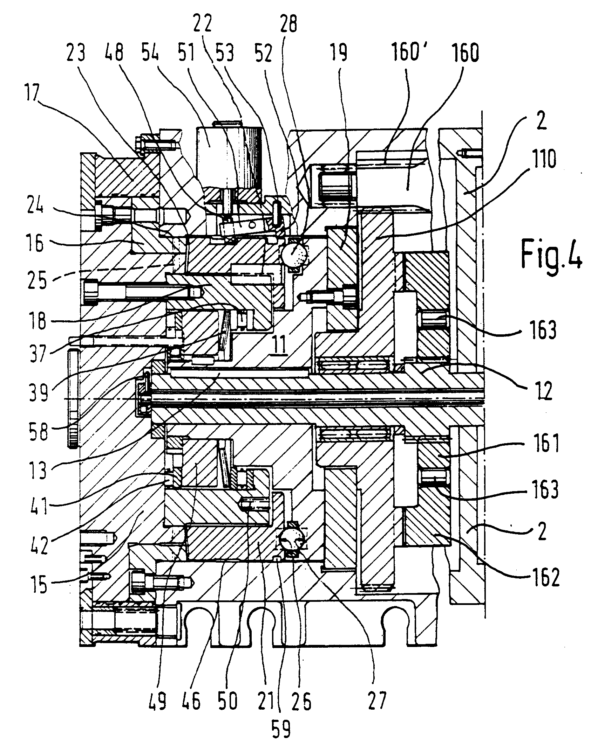

Der Steuerkörper 11 und der Verriegelungsteil 21 haben jeweils eine Kugellaufbahn 26 und 27. Diese Kugellaufbahnen liegen einander gegenüber und haben jeweils den gleichen Durchmesser. Zwischen den Kugellaufbahnen 26, 27 befinden sich Lagerkugeln 28, im folgenden kurz Kugeln genannt, die in einem Lagerkäfig 29 gehalten sind, aus dem die Kugeln nicht herausfallen können. In jeder der Kugellaufbahnen ist jeweils eine der Anzahl der Kugeln entsprechende Anzahl von Ausnehmungen 30, 31 vorgesehen, die für den Eingriff jeweils einer Kugel bestimmt sind. In der in Fig. 2 dargestellten Lage von Teilen befinden sich die Kugeln 28 jeweils außerhalb der Ausnehmungen 30, 31, so daß die Zähne 23 des Verriegelungsteiles 21 in die Zähne 24 und 25 des Zahnringes 16 bzw. des Revolverkopfes 15 eingreifen. In Fig. 3 ist der Eingriff der Kugeln 28 in jeweils zwei einander gegenüberliegende Ausnehmungen 30, 31 in dem Steuerkörper 11 und dem Verriegelungsteil 21 vorgesehen, weshalb die Zähne 23 am Verriegelungsteil 21 außer Eingriff mit den Zähnen 24 und 25 an dem Zahnring 16 und dem Revolverkopf 15 sind.

Der Verbindungskörper 18 hat einen nach innen ragenden Flansch, auf dem sich ein Zylinderrollen aufweisendes Axiallager 37 abstützt. Auf dem dem Flansch am Verbindungskörper 18 gegenüberliegenden Teil des Axiallagers 37 stützt sich ein Satz Tellerfedern 39 ab, der an einem Stützring 49 ansteht, zwischen dem und dem Revolverkopf 15 ein sich in Richtung des Stützringes 49 auf einer Lagerscheibe 41 abstützendes Nadellager 42 als Axiallager vorgesehen ist. Zwischen dem Verriegelungsteil 21 und dem Verbindungskörper 18 sind diese beiden Teile in axialer Richtung voneinander zu entfernen suchende Federn 50 angeordnet.

Auf dem Außenumfang des Verriegelungsteiles 21 ist ein Kranz von Löchern 46 angeordnet, die zum Eingriff eines Indexierbolzens 48 dienen. Der Indexierbolzen 48 befindet sich an einer am Gehäuse 2 schwenkbar gelagerten Wippe 51, deren vom Indexierbolzen 48 abgewandtes Ende einen Arretierungsteil 52 hat. Eine zwischen dem Gehäuse 1 und der Wippe 51 eingespannte Feder 53 sucht den Arretierungsteil 52 an dem Verriegelungsteil 21 zu halten. Zum Betätigen der Wippe dient ein mit dem Indexierbolzen 48 zusammenwirkender Hubmagnet 54, der von einem Winkelpositionsgeber 55 gesteuert wird, welcher mittels eines Zahnriemengetriebes 56 von einer in der Hohlwelle 12 untergebrachten Steuerwelle 57 antreibbar ist. An der Steuerwelle 57 ist auf der vom Winkelpositionsgeber 55 abgewandten Seite ein Radialstift 58 angeordnet, der in eine Ausnehmung im Revolverkopf 15 derart eingreift, daß die Steuerwelle 57 die gleichen Drehbewegungen wie der Revolverkopf 15 ausführt.

Im Bereich des von den Kugellaufbahnen 26, 27 und den Kugeln 28 gebildeten Axiallagers 26 bis 28 befindet sich auf der Außenseite des Verriegelungsteiles 21 eine Riegelnut 59, die für den Eingriff des an der Wippe 51 angeordneten Arretierungsteiles 52 vorgesehen ist, wenn sich der Verriegelungsteil 21 in der in Fig. 3 dargestellten Lage befindet.

Der Antriebsmotor 3 treibt über das Planetenradgetriebe 6 bis 9 das Antriebsrad 10 an, das über die Einlegekörper 13, 13a und die Hohlwelle 12 den Steuerkörper 11 mitnimmt. Laufen die Kugeln 28 jeweils in die Ausnehmungen 30, 31 ein (Fig. 3), so wird der Verriegelungsteil 21 unter der Wirkung der Federn 50 in Richtung zum Antriebsmotor 3 axial verschoben und von den Axialzähnen 24, 25 an dem Zahnring 16 bzw. dem Revolverkopf 15 so weit entfernt, daß die Axialzähne 23 außer Eingriff mit den Axialzähnen 24, 25 sind. Diese Lage des Verriegelungskörpers 21 wird durch Eingriff des Riegelteiles 52 der Wippe 51 in die Riegelnut 59 gesichert. Der Revolverkopf 15 folgt der Drehbewegung des Steuerkörpers 11. Wenn sich der Revolverkopf 15 um einen von der jeweiligen Anzahl der Kugeln 28 und der Ausnehmungen 30, 31 abhängigen Zentriwinkel gedreht hat, wird der Hubmagnet 54 mittels eines Signals des Winkelpositionsgebers 55 betätigt. Hierdurch wird der Indexierbolzen 48 in Richtung zum Verriegelungsteil 21 gedrückt und greift in eines der Löcher 46 ein, wodurch der Revolverkopf 15 vorpositioniert ist. Zugleich schwenkt der Riegelteil 52 aus der Riegelnut 59, so daß von der Kraft des Antriebsmotors 3 herrührend die Kugeln 28 aus den sie aufnehmenden Ausnehmungen 30, 31 entfernt werden und der Verriegelungsteil 21 in Richtung zum Revolverkopf 15 verschoben wird, wodurch seine Axialzähne 23 in die Axialzähne 24 und 25 am Zahnring 16 bzw. am Revolverkopf 15 eingreifen und diesen in seiner neuen Drehlage festlegen.

Der Revolverkopf 15 kann auch in Gegenrichtung geschwenkt werden. Hierzu läuft der Antriebsmotor 3 in anderer Drehrichtung als vorbeschrieben.

Das in Fig. 4 dargestellte, zweite Ausführungsbeispiel eines erfindungsgemäßen Werkzeugrevolvers stimmt teilweise mit dem ersten Ausführungsbeispiel überein. Die übereinstimmenden Teile sind deshalb mit gleichen Bezugszahlen gekennzeichnet. Hinsichtlich der gleich ausgebildeten Teile wird auf die vorausgehende Beschreibung Bezug genommen. Im folgenden sind daher nur die Unterschiede beschrieben, welche das zweite Ausführungsbeispiel gegenüber dem ersten Ausführungsbeispiel aufweist.

Statt des drehfest mit der Hohlwelle 12 verbundenen Antriebsrades 10 ist ein drehbar auf der Hohlwelle 12 gelagertes Zahnrad 110 vorgesehen, das mit einem Ritzel 160' kämmt, welches an einer Abtriebswelle 160 eines nicht dargestellten Untersetzungsgetriebes vorgesehen ist, das vom Antriebsmotor angetrieben wird.

Wie Fig. 4 zeigt, ist zwischen dem Zahnrad 110 und dem Deckel 2 eine elastische Kupplungseinrichtung angeordnet, die einen drehfest auf der Hohlwelle 12 sitzenden Innenring 161 sowie einen konzentrisch letzteren umgebenden Außenring 162 aufweist. Der Außenring 162 hat eine Innenverzahnung, der Innenring 161 eine korrespondierend ausgebildete Außenverzahnung. Bei beiden sind die zwischen zwei benachbarten Zähnen vorgesehenen Lücken so ausgebildet, daß der in diese Lücke eingreifende Zahn der anderen Verzahnung die Lücke in zwei im Querschnitte zumindest nahezu zylindrische Räume unterteilt, in denen je ein stabförmiger Dämpfungskörper 163 aus einem gummielastischen Material spielfrei liegt. Die Dämpfungskörper 163 werden bei einer Drehmomentübertragung sowohl in der einen als auch in der anderen Richtung elastisch nachgiebig zusammengedrückt und wirken deshalb als Stoßdämpfer.

Die Verbindung zwischen dem Zahnrad 110 und dem Außenring 162 ist im Ausführungsbeispiel mittels formschlüssig ineinander greifender Klauen ausgeführt. Statt dessen könnten aber beispielsweise auch Bolzen vorgesehen sein, welche parallel zur Hohlwelle 12 liegen und in Bohrungen des Zahnrades 110 und des Außenringes 162 eingreifen.

## Patentansprüche

1. Werkzeugrevolver mit
a) einem Gehäuse (1),
b) einem relativ zum Gehäuse (1) drehbaren Revolverkopf (15),
c) zwei axial zur Drehachse des Revolverkopfes (15) angeordneten Zahnkränzen (24, 25), von denen der eine (25) drehfest mit dem Revolverkopf (15) und der andere (24) drehfest mit dem Gehäuse (1) verbunden ist,
d) einem relativ zum Revolverkopf (15) axial verschiebbaren Verriegelungsteil (21) mit einer auf die beiden Zahnkränze (24, 25) ausgerichteten und in seiner Verriegelungsstellung mit diesen in Eingriff stehenden Verzahnung (23),
e) einem am Verriegelungsteil (21) angreifenden Axialtrieb (11, 26, 27, 28), der einen relativ zum Verriegelungsteil (21) verdrehbaren Steuerkörper (11) und wenigstens eine Kurvenbahn (26, 27) aufweist,
f) einem Drehantrieb für den Revolverkopf (15) mit dem über ein Getriebe (5 bis 10) antreibbaren Steuerkörper (11) als schleppendem Bauteil, dem in der Entriegelungsstellung des Verriegelungsteils (21) infolge einer dann wirksamen Kupplung der Revolverkopf (15) nur in der Schlepprichtung folgt,
g) einer die Drehbewegung des Antriebsmotors (3) stetig auf den Steuerkörper übertragenden Ausbildung des Getriebes (5 bis 10),
h) einem dem Axialtrieb (11, 26, 27, 28) und dem Drehantrieb gemeinsamen Antriebsmotor (3) und
i) einer den Revolverkopf (15) am Ende einer Drehbewegung in eine andere Winkelstellung festhaltenden Vorpositioniereinrichtung (46, 48),
dadurch gekennzeichnet, daß
k) die Kurvenbahn (26, 27) eine Form hat, die eine Verschiebung des Verriegelungsteils (21) in seine Verriegelungsstellung durch eine Fortsetzung der Drehbewegung des Steuerkörpers (11) relativ zum Verriegelungsteil (21) in Richtung der vorausgegangenen Drehbewegung gestattet,
l) die Kurvenbahn (26, 27) zwei Gruppen von Abschnitten aufweist, von denen die Abschnitte der einen Gruppe in einer ersten und diejenigen der anderen Gruppe in einer axial im Sinne einer Bildung von Vertiefungen (30, 31) versetzten zweiten Axialebene liegen, und daß die Abschnitte der einen Gruppe im Wechsel mit den Abschnitten der anderen Gruppe in Umfangsrichtung aufeinander folgen und daß
m) die Abschnitte (30, 31) der einen Gruppe eine Mitnahme des Revolverkopfes (15) durch den Steuerkörper (11) bewirken, wenn gleichzeitig die Vorpositioniereinrichtung (46, 48) unwirksam ist.

2. Werkzeugrevolver nach Anspruch 1, dadurch gekennzeichnet, daß die Kurvenbahn (26, 27) an wenigstens einer koaxial zum Revolverkopf (15) angeordneten Ringfläche vorgesehen ist.

3. Werkzeugrevolver nach Anspruch 2, dadurch gekennzeichnet, daß die Ringfläche in der dem Verriegelungsteil (21) zugekehrten Stirnfläche des Steuerkörpers (11) liegt.

4. Werkzeugrevolver nach Anspruch 3, dadurch gekennzeichnet, daß eine zweite, vorzugsweise symmetrisch zu der am Steuerkörper (11) vorgesehenen ersten Kurvenbahn (27) ausgebildete zweite Kurvenbahn (26) in einer auf die erste Kurvenbahn (27) ausgerichteten Ringzone des Verriegelungskörpers (21) angeordnet ist.

5. Werkzeugrevolver nach einem der Ansprüche 1 bis 4, gekennzeichnet durch eine Arretierungseinrichtung (51 bis 53), welche in ihrem wirksamen Zustand eine der Lagerflächen (26) des zwischen dem Verriegelungsteil (21) und dem Steuerkörper (11) wirksamen Axiallagers daran hindert, sich von der anderen Lagerfläche (27) zu entfernen.

6. Werkzeugrevolver nach Anspruch 5, dadurch gekennzeichnet, daß die Arretierungseinrichtung (51, 52, 53) nach Art einer mittels einer Feder (53) belasteten Wippe (51) ausgebildet ist, von der das eine Ende zum Eingriff in eine Riegelnut (59) am einen der die Lagerflächen (26) des Axiallagers (26 bis 28) aufweisenden Teile (21) dient.

7. Werkzeugrevolver nach einem der Ansprüche 1 bis 6, dadurch gekennzeichnet, daß der drehfest mit der Antriebswelle (12) verbundene Steuerkörper (11) über eine elastische Kupplungseinrichtung (161, 162, 163) mit dem Motor (3) in Getriebeverbindung steht.

8. Werkzeugrevolver nach Anspruch 7, dadurch gekennzeichnet, daß die elastische Kupplungseinrichtung (161, 612, 163) einen drehfest auf einer zentralen Antriebswelle (12), mit welcher der Steuerkörper (11) unverdrehber verbunden ist, angeordneten Innenring (161) und einen diesen umgebenden Außenring (162) aufweist, die mit ineinandergreifenden Zähnen versehen sind, zwischen denen elastische Zwischenglieder (163) angeordnet sind.

9. Werkzeugrevolver nach Anspruch 8, dadurch gekennzeichnet, daß der Außenring (162) mit dem Steuerkörper (11) über eine in Drehrichtung formschlüssige Mitnehmervorrichtung gekuppelt ist.

## Claims

1. Tool turret with
a) a housing (1),
b) a turret head (15) able to rotate relative to the housing (1),
c) two gear rings (24, 25) arranged axially with respect to the axis of rotation of the turret head (15), whereof one (25) is connected in a non-rotary manner to the turret head (15) and the other (24) is connected in a non-rotary manner to the housing (1),
d) a locking part (21) axially displaceable relative to the turret head (15), with toothing (23) aligned with the two gear rings (24, 25) and meshing with the latter in its locking position,
e) an axial drive (11, 26, 27, 28) acting on the locking part (21), which axial drive comprises a control member (11) able to rotate relative to the locking part (21) and at least one cam path (26, 27),
f) a rotary drive for the turret head (15) with the control member (11) able to be driven by way of a gear unit (5 to 10), as a towing component, which control member in the unlocked position of the locking part (21) is followed as a result of a coupling which is then effective, by the turret head (15) solely in the towing direction,
g) a construction of the gear unit (5 to 10) continuously transmitting the rotary movement of the drive motor (3) to the control member,
h) a drive motor (3) common to the axial drive (11, 26, 27, 28) and the rotary drive and
i) a pre-positioning device (46, 48) retaining the turret head (15) in another angular position at the end of a rotary movement,
characterised in that
k) the cam path (26, 27) has a shape which allows a displacement of the locking part (21) into its locked position due to a continuation of the rotary movement of the control member (11) relative to the locking part (21) in the direction of the preceding rotary movement,
l) the cam path (26, 27) comprises two groups of sections, whereof the sections of the one group lie in a first axial plane and those of the other group lie in a second axial plane offset axially for the purpose of forming recesses (30, 31), and that the sections of the one group follow each other in the peripheral direction alternating with the sections of the other group and that
m) the sections (30, 31) of the one group bring about an entrainment of the turret head (15) by the control member (11), if the pre-positioning device (46, 48) is simultaneously inoperative.

2. Tool turret according to Claim 1, characterised in that the cam path (26, 27) is provided on at least one annular surface arranged coaxially with the turret head (15).

3. Tool turret according to Claim 2, characterised in that the annular surface lies in the end face of the control member (11) facing the locking part (21).

4. Tool turret according to Claim 3, characterised in that a second cam path (26) constructed preferably symmetrically to the first cam path (27) provided on the control member (11) is located in an annular region of the locking member (21) aligned with the first cam path (27).

5. Tool turret according to one of Claims 1 to 4, characterised by a locking device (51 to 53), which in its operative state prevents one of the bearing surfaces (26) of the axial bearing acting between the locking part (21) and the control member (11) from moving away from the other bearing surface (27).

6. Tool turret according to Claim 5, characterised in that the locking device (51, 52, 53) is constructed in the manner of a rocker (51) loaded by means of a spring (53), whereof the one end serves for engagement in a locking groove (59) on one of the parts (21) comprising the bearing surfaces (26) of the axial bearing (26 to 28).

7. Tool turret according to one of Claims 1 to 6, characterised in that the control member (11) connected in a non-rotary manner to the drive shaft (12) is in geared connection with the motor (3) by way of a flexible coupling device (161, 162, 163).

8. Tool turret according to Claim 7, characterised in that the flexible coupling device (161, 162, 163) comprises an inner ring (161) arranged in a non-rotary manner on a central drive shaft (12), to which the control member (11) is connected in a non-rotary manner, and an outer ring (162) surrounding the inner ring, which are provided with interengaging teeth, between which flexible intermediate members (163) are located.

9. Tool turret according to Claim 8, characterised in that the outer ring (162) is connected to the control member (11) by way of an entrainment device which is form-locking in the direction of rotation.

## Revendications

1. Revolver porte-outils qui comprend :
a) une enveloppe (1);
b) une tête revolver (1) pouvant tourner par rapport à l'enveloppe 1;
c) deux couronnes dentées (24, 25) disposées axialement par rapport à l'axe de rotation de la tête revolver (15) et dont celle référencée (25) est solidaire en rotation de la tête revolver (15), tandis que l'autre, (référence 24) est solidaire en rotation de l'enveloppe (1);
d) un élément de verrouillage (21) pouvant coulisser axialement par rapport à la tête revolver (15) et qui comporte une denture (23), orientée vers les deux couronnes dentées (24, 25) et qui, en position de verrouillage, est en prise avec ces dernières.
e) un mécanisme d'actionnement axial (11, 26, 27, 28), associé à l'élément de verrouillage (21) et qui comporte un organe de commande (11) pouvant tourner par rapport à l'élément de verrouillage (21) et comportant, au moins, une piste de came (26, 27);
f) un dispositif de rotation pour la tête revolver (15) grâce auquel, un organe de commande (11), pouvant être actionné par un mécanisme (5 à 10), pour faire fonction d'organe de traction, l'élément de verrouillage (21), par suite d'un couplage alors en activité, fait que la tête revolver ne suit le mouvement que dans la direction de traction;
g) un arrangement ayant pour effet que le mouvement de rotation du moteur (3) est constamment transmis sur l'organe de commande du mécanisme (5 à 10);
h) un moteur (3) commun au dispositif d'actionnement axial (11, 26, 27, 28) et au mécanisme de rotation (3); et
i) un dispositif de prépositionnement (46, 48) qui, à la fin de son mouvement de rotation, retient la tête revolver (15) dans une position angulaire différente, caractérisé en ce que :
k) la piste de came (26, 27) a la forme qui convient pour permettre que l'élément de verrouillage (21) s'avance à sa position de verrouillage du fait de la continuation du mouvement de rotation de l'organe de commande (11) par rapport à l'élément de verrouillage (21) dans le sens de rotation précédent;
l) la piste de came (26, 27) présente deux groupes de sections dont celles de la première et celles de la seconde sont situées dans des plans décalés mutuellement dans le sens axial de façon à produire des renfoncements (30, 31), et en ce que les sections de l'un des groupes alternent avec celles de l'autre groupe dans le sens circonférentiel; et
m) les sections (30, 31) de l'un des groupes provoquent l'entraînement de la tête revolver (15) par l'organe de commande (11) lorsque, simultanément, le dispositif de prépositionnement (46, 48) est inopérant.

2. Tête revolver selon la revendication 1, caractérisée en ce que la piste de came (26, 27) est prévue à, au moins, une surface annulaire disposée coaxialement à la tête revolver (15).

3. Tête revolver selon la revendication 2, caractérisée en ce que ladite surface annulaire est située dans la surface frontale de l'organe de commande (11) orientée vers l'organe de verrouillage (21).

4. Tête revolver selon la revendication 3, caractérisée par une seconde piste de came (26), de préférence symétrique à la première piste (27), prévue sur l'organe de commande (11) et située dans une zone annulaire de l'organe de verrouillage (21) dans l'alignement de la première piste de came (27).

5. Tête revolver selon l'une quelconque des revendications 1 à 4, caractérisée par un dispositif d'arrêt (51 à 53) qui, dans sa position active empêche que l'une des surfaces de support (26) du palier axial effectif entre l'organe de verrouillage (21) et l'organe de commande (11) de s'éloigner de l'autre surface (27).

6. Tête revolver selon la revendication 5, caractérisée en ce que le dispositif d'arrêt (51, 52, 53) est formé à la manière d'une bascule (51) chargée par un ressort (3), dont l'une des extrémités est destinée à s'engager dans une rainure annulaire (59) prévue à l'un des composants (21) présentant les surfaces de support (26) du palier axial (26 à 28).

7. Tête revolver selon l'une quelconque des revendications 1 à 6, caractérisée en ce que l'organe de commande (11), solidaire en rotation de l'arbre de transmission (12), est relié mécaniquement au moteur (3) par l'intermédiaire d'un accouplement élastique (161, 162, 163).

8. Tête revolver selon la revendication 7, caractérisée en ce que le dispositif d'accouplement élastique (161, 612, 163) comporte une bague intérieure (161), montée solidaire en rotation sur l'arbre de transmission central (12), dont l'organe de commande (11) est solidaire en rotation, et une bague extérieure (162) entourant la bague intérieure (161), garnie de dents engrénantes entre lesquelles sont interposés des éléments élastiques (163).

9. Tête revolver selon la revendication 8, caractérisée en ce que la bague extérieure (162) est accouplée à l'organe de commande (11) par un dispositif de rotation mécanique unidirectionnel.
